# EUROPÄISCHE PATENTSCHRIFT

(11) **EP 0 869 687 B1**
(45) Veröffentlichungstag und Bekanntmachung des Hinweises auf die Patenterteilung: **27.09.2006**
(21) Anmeldenummer: 98440050.7
(22) Anmeldetag: 13.03.1998
(51) Int. Cl.: H04Q 3/00, H04Q 3/66

(54) **Verfahren und Vorrichtungen zum Aufbau einer vermittelten Verbindung**
Method and devices for establishing a switched connection
Procédé et dispositifs pour réaliser une interconnexion commutée

(30) Priorität: 05.04.1997 DE 19714116
(43) Veröffentlichungstag der Anmeldung: 07.10.1998
(73) Patentinhaber: Naxos Data LLC, Las Vegas, NV 89119 (US)
(72) Erfinder: Stemper, Peter Joachim, 70839 Gerlingen (DE)
(74) Vertreter: Harris, Ian Richard

(56) Entgegenhaltungen:
- EP-A- 0 696 147
- DE-A- 3 626 870
- DE-A- 4 428 349

## Beschreibung

Die Erfindung betrifft ein Telekommunikations-Wählnetz mit mehreren Vermittlungsstellen, die direkt oder indirekt miteinander verbunden sind, derart, daß mindestens zwischen einzelnen Paaren von Vermittlungsstellen mehr als zwei Wege möglich sind nach dem Oberbegriff des Anspruchs 1, ein Verfahren zum Aufbau einer vermittelten Verbindung in einem Telekommunikations-Wählnetz nach dem Oberbegriff des Anspruchs 2, eine Vermittlungsstelle nach dem Oberbegriff des Anspruchs 3 und eine Wegewahleinrichtung nach dem Oberbegriff des Anspruchs 4.

Telekommunikations-Wählnetze sind so aufgebaut, daß die einzelnen Vermittlungsstellen mehr oder weniger stark untereinander vermascht sind. Dies bedeutet einerseits, daß überhaupt von jeder Vermittlungsstelle dieses Netzes zu jeder anderen eine Verbindung aufgebaut werden kann und andererseits, daß in der Regel nicht nur eine Möglichkeit besteht, diese Verbindung zu führen, sondern daß mehr als eine Möglichkeit besteht, oft drei oder mehr Möglichkeiten. Damit ist nicht nur eine Sicherheit gegen Störungen, sondern auch eine gleichmäßigere Lastaufteilung gegeben. Es gibt eine Vielzahl von Strategien, um für jeden Verbindungsaufbauversuch eine als optimal angesehene Möglichkeit auszuwählen. Auf jeden Fall werden dabei zumindest die zuletzt vorgenommenen Versuche und deren Ergebnis berücksichtigt.

Ein Problem dabei ist auch, daß nicht alle zur Verfügung stehenden Möglichkeiten gleichwertig sind. Einerseits sind einzelne der möglichen Wege teurer als andere, andererseits sind auch die Kapazitäten der Wege teilweise sehr unterschiedlich.

Die Offenlegungsschrift DE-3 626 870-A offenbart ein Wegewahlverfahren, wobei ein Alternativweg dann nicht ausgewählt wird, wenn eine Strecke des Alternativweges beim vorangegangenen Versuch blockiert war.

Der Erfindung liegt die Aufgabe zugrunde, ein Telekommunikations-Wählnetz sowie geeignete Verfahren und Komponenten anzugeben, um die Wahrscheinlichkeit erfolgloser Verbindungsaufbauversuche weiter zu reduzieren.

Diese Aufgabe wird erfindungsgemäß gelöst durch ein Telekommunikations-Wählnetz nach der Lehre des Anspruchs 1, ein Verfahren nach der Lehre des Anspruchs 2 , eine Vermittlungsstelle nach der Lehre des Anspruchs 3 und eine Wegewahleinrichtung nach der Lehre des Anspruchs 4.

Erfindungsgemäß wird hier berücksichtigt, daß die Wege zwischen zwei Vermittlungsstellen teilweise übertragungstechnisch zusammengefaßt sind und dann auch gemeinsam überlastet oder gar gestört sind.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt einen Ausschnitt aus einem erfindungsgemäßen Telekommunikations-Wählnetz aus vermittlungstechnischer Sicht.
- Figur 2: zeigt denselben Ausschnitt aus dem erfindungsgemäßen Telekommunikations-Wählnetz, jedoch aus übertragungstechnischer Sicht.

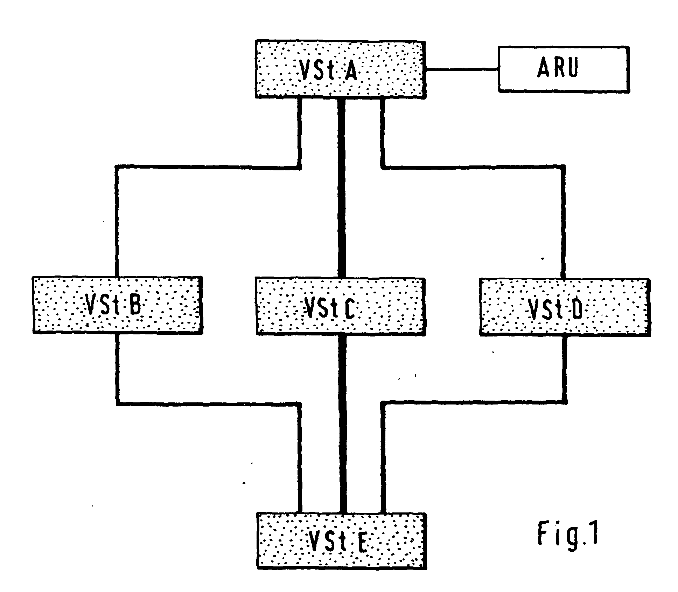

Anhand der Figur 1 wird zunächst kurz nochmals die Problemstellung erläutert. Figur 1 zeigt zunächst ein Paar von Vermittlungsstellen, VStA und VStE, die auf drei unterschiedlichen Wegen miteinander kommunizieren können, nämlich über die Vermittlungsstellen VStB oder VStC oder VStD. Weiter ist in Figur 1 noch eine Wegewahleinrichtung ARU eingezeichnet, die an die Vermittlungsstelle VStA angeschlossen ist. Alle diese Vermittlungsstellen sind auch noch mit anderen Vermittlungsstellen, die Vermittlungsstellen VStB, VStC und VStD eventuell auch noch untereinander verbunden. Damit sind zwischen den beiden Vermittlungsstellen grundsätzlich auch noch andere Wege möglich als die eingezeichneten, beispielsweise von der Vermittlungsstelle VStA über die Vermittlungsstelle VStB und die Vermittlungsstelle VStC nach der Vermittlungsstelle VStE.

Es wird nun unterstellt, daß die Vermittlungsstelle VStA bei jedem Verbindungsaufbauversuch zur Vermittlungsstelle VStE immer zunächst versucht, einen der drei gezeigten Wege zu belegen. Ein übliches Vorgehen ist dabei, einen Weg dann zumindest nicht als ersten Versuch auszuwählen, wenn dieser Weg beim vorangegangenen Versuch blockiert war. War beispielsweise zuletzt der Weg über die Vermittlungsstelle VStC blockiert, dann wird, wiederum beispielsweise, als nächstes der Weg über die Vermittlungsstelle VStD versuchsweise ausgewählt.

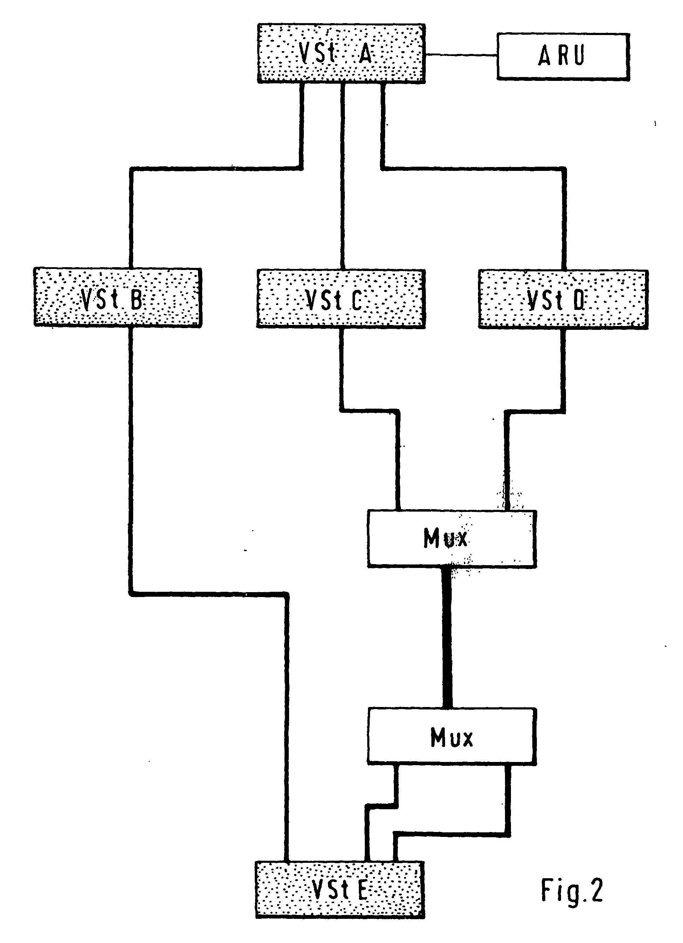

Hier setzt nun die Erfindung ein. Heutzutage sind nämlich die Übertragungswege zwischen zwei Vermittlungsstellen häufig nicht einfach durchgehende Kabel, die allenfalls durch Spleißen verlängert sind. Vielmehr sind häufig, um Synergieeffekte auszunutzen, dort, wo zwei Wege zumindest teilweise gemeinsam verlaufen, diese auch übertragungstechnisch zusammengefaßt. Im Beispiel ist nun, wie Figur 2 zeigt, ein Teil des Weges zwischen der Vermittlungsstelle VStC und der Vermittlungsstelle VStE und ein Teil des Weges zwischen der Vermittlungsstelle VStD und der Vermittlungsstelle VStE identisch und deshalb durch Multiplexeinrichtungen Mux an beiden Enden zusammengefaßt. Die Gründe für solche Zusammenfassungen sind vielfältig und sollen hier nicht näher betrachtet werden. Es wird noch darauf hingewiesen, daß solche Zusammenfassungen durchaus auch dynamisch sein können. Durch sogenannte Cross-Connects können die übertragungstechnischen Mittel (Leitungen, Richtfunkverbindungen, ...) je nach Bedarf verschiedenen in Frage kommenden Verbindungen zugeordnet oder auf diese aufgeteilt werden.

Nun soll ein Versuch fehlgeschlagen sein, von der Vermittlungsstelle VStA über die Vermittlungsstelle VStC die Vermittlungsstelle VStE zu erreichen. Dann ist offensichtlich, daß ein weiterer Versuch über die Vermittlungsstelle VStB mit größerer Wahrscheinlichkeit zum Erfolg führt als ein Versuch über die Vermittlungsstelle VStD. Erfindungsgemäß wird deshalb beim nächsten Versuch der Weg über die Vermittlungsstelle VStD nicht ausgewählt, weil dieser zum Teil mit dem Weg über die Vermittlungsstelle VStD identisch ist, der beim vorangegangenen Versuch blockiert war.

Faktisch wird damit die Zahl der Möglichkeiten oder auch Alternativwege verringert. Gegebenenfalls muß Vorsorge getroffen werden, daß zum Ausgleich weitere Alternativwege vorgesehen werden.

In der Praxis erfolgt die Auswahl eines Weges für einen Verbindungsaufbauversuch anhand von Leitweglenkungsdaten, die in der Regel zu Leitweglenkungstabellen zusammengefaßt sind. In Figur 2 sind diese als Wegewahleinrichtung ARU bei der Vermittlungsstelle VStA eingezeichnet. Diese Leitweglenkungsdaten sind heute in jeder Vermittlungsstelle für all diejenigen Verbindungen eingerichtet, die von dieser Vermittlungsstelle ausgehen. Diese Leitweglenkungsdaten und Leitweglenkungstabellen könnten aber grundsätzlich auch von den Vermittlungsstellen getrennt sein. Bei der Erstellung dieser Leitweglenkungsdaten und Leitweglenkungstabellen muß nun berücksichtigt werden, daß einzelne Wege nur bedingt zur Verfügung stehen.

Diese Berücksichtigung kann beispielsweise dadurch erfolgen, daß jeweils nur einer dieser Wege überhaupt als Alternativweg vorgesehen wird. Auch durch die Festlegung der Reihenfolge der Abfrage oder durch Unterabfragen kann erreicht werden, daß zwei teilweise identisch geführte Wege nicht unmittelbar nacheinander für Verbindungsaufbauversuche ausgewählt werden.

Die erfindungsgemäße Ausgestaltung des Telekommunikations-Wählnetzes hat nicht nur eine geringere Blockierungswahrscheinlichkeit zur Folge, sondern ermöglicht auch eine genauere Planung.

## Patentansprüche

1. Telekommunikations-Wählnetz mit mehreren Vermittlungsstellen (VStA, VStB, VStC, VStD, VStE), die direkt oder indirekt miteinander verbunden sind, derart, daß mindestens zwischen einzelnen Paaren von Vermittlungsstellen (VStA/VStE) mehr als zwei Wege (VStA-VStB-VStE, VStA-VStC-VStE, VStA-VStD-VStE) möglich sind, mit mindestens einer Wegewahleinrichtung (ARU), die für jede aufzubauende Verbindung über die Auswahl des zu verwendenden Wegs entscheidet und einen Weg dann nicht auswählt, wenn er beim vorangegangenen Versuch blockiert war, **dadurch gekennzeichnet, daß** die Wegewahleinrichtung (ARU) derart ausgestaltet ist, daß sie einen anderen Weg auch dann nicht auswählt, wenn er streckenweise (Mux-Mux) mit dem Weg identisch ist, der beim vorangegangenen Versuch blockiert war.

2. Verfahren zum Aufbau einer vermittelten Verbindung in einem Telekommunikations-Wählnetz mit mehreren Vermittlungsstellen (VStA, VStB, VStC, VStD, VStE), die direkt oder indirekt miteinander verbunden sind, derart, daß mindestens zwischen einzelnen Paaren von Vermittlungsstellen (VStA/VStE) mehr als zwei Wege (VStA-VStB-VStE, VStA-VStC-VStE, VStA-VStD-VStE) möglich sind, mit mindestens einer Wegewahleinrichtung (ARU), die für jede aufzubauende Verbindung über die Auswahl des zu verwendenden Wegs entscheidet und einen Weg dann nicht auswählt, wenn er beim vorangegangenen Versuch blockiert war, **dadurch gekennzeichnet, daß** die Wegewahleinrichtung (ARU) einen anderen Weg auch dann nicht auswählt, wenn er streckenweise (Mux-Mux) mit dem Weg identisch ist, der beim vorangegangenen Versuch blockiert war.

3. Vermittlungsstelle für ein Telekommunikations-Wählnetz mit mehreren Vermittlungsstellen (VStA, VStB, VStC, VStD, VStE), die direkt oder indirekt miteinander verbunden sind, derart, daß mindestens zwischen dieser Vermittlungsstelle (VStA) und einer anderen Vermittlungsstelle (VStE) mehr als zwei Wege (VStA-VStB-VStE, VStA-VStC-VStE, VStA-VStD-VStE) möglich sind, mit einer Wegewahleinrichtung (ARU), die für jede aufzubauende Verbindung über die Auswahl des zu verwendenden Wegs entscheidet und einen Weg dann nicht auswählt, wenn er beim vorangegangenen Versuch blockiert war, **dadurch gekennzeichnet, daß** die Wegewahleinrichtung (ARU) derart ausgestaltet ist, daß sie einen anderen Weg auch dann nicht auswählt, wenn er streckenweise (Mux-Mux) mit dem Weg identisch ist, der beim vorangegangenen Versuch blockiert war.

4. Wegewahleinrichtung (ARU) für ein Telekommunikations-Wählnetz mit mehreren Vermittlungsstellen (VStA, VStB, VStC, VStD, VStE), die direkt oder indirekt miteinander verbunden sind, derart, daß mindestens zwischen einzelnen Paaren von Vermittlungsstellen (VStA/VStE) mehr als zwei Wege (VStA-VStB-VStE, VStA-VStC-VStE, VStA-VStD-VStE) möglich sind, wobei die Wegewahleinrichtung (ARU) mindestens einer der Vermittlungsstellen (VStA) zuordenbar und so ausgestaltet ist, daß sie für jede aufzubauende Verbindung über die Auswahl des zu verwendenden Wegs entscheidet und einen Weg dann nicht auswählt, wenn er beim vorangegangenen Versuch blockiert war, **dadurch gekennzeichnet, daß** die Wegewahleinrichtung (ARU) derart ausgestaltet ist, daß sie einen anderen Weg auch dann nicht auswählt, wenn er streckenweise (Mux-Mux) mit dem Weg identisch ist, der beim vorangegangenen Versuch blockiert war.

5. Telekommunikations-Wählnetz nach Anspruch 1, **dadurch gekennzeichnet, daß** dort, wo zwei an sich in Frage kommende Wege streckenweise miteinander identisch sind, die Zahl der als Alternativwege in Frage kommenden Wege erhöht wird.

## Claims

1. A switched telecommunication network comprising several exchanges (VStA, VStB, VStC, VStD, VStE) which are directly or indirectly interconnected such that at least between individual pairs of exchanges (VStA/VStE), more than two paths (VStA-VStB-VStE, VStA-VStC-VStE, VStA-VStD-VStE) are possible, and comprising at least one routing facility (ARU) which decides on the selection of the path to be used for each connection to be established and which does not then select a path if it was blocked on the previous attempt, **characterised in that** the routing facility (ARU) is designed also then not to select a different path, if it is identical in sections (Mux-Mux) with the path which was blocked on the previous attempt.

2. A method of establishing a switched connection in a switched telecommunication network comprising several exchanges (VStA, VStB, VStC, VStD, VStE) which are directly or indirectly interconnected such that at least between individual pairs of exchanges (VStA/VStE), more than two paths (VStA-VStB-VStE, VStA-VStC-VStE, VStA-VStD-VStE) are possible, and comprising at least one routing facility (ARU) which decides on the selection of the path to be used for each connection to be established and which does not then select a path if it was blocked on the previous attempt, **characterised in that** the routing facility (ARU) also then does not select a different path, if it is identical in sections (Mux-Mux) with the path which was blocked on the previous attempt.

3. An exchange for a switched telecommunication network comprising several exchanges (VStA, VStB, VStC, VStD, VStE) which are directly or indirectly interconnected such that at least between said exchange (VStA) and another exchange (VStE), more than two paths (VStA-VStB-VStE, VStA-VStC-VStE, VStA-VStD-VStE) are possible, and further comprising a routing facility (ARU) which decides on the selection of the respective path to be used for each connection to be established and which does not then select a path if it was blocked on the previous attempt, **characterised in that** the routing facility (ARU) is designed also then not to select a different path, if it is identical in sections (Mux-Mux) with the path which was blocked on the previous attempt.

4. A routing facility (ARU) for a switched telecommunication network comprising several exchanges (VStA, VStB, VStC, VStD, VStE) which are directly or indirectly interconnected such that at least between the individual pairs of exchanges (VStA/VStE) more than two paths (VStA-VStB-VStE, VStA-VStC-VStE, VStA-VStD-VStE) are possible, the routing facility (ARU) being able to be associated with at least one of the exchanges (VStA) and being designed to decide on the selection of the path to be used for each connection to be established and not to then select a path if it was blocked on the previous attempt, **characterised in that** the routing facility (ARU) is designed also then not to select a different path, if it is identical in sections (Mux-Mux) with the path which was blocked on the previous attempt.

5. A switched telecommunication network as claimed in Claim 1, **characterised in that** in the place where two paths in question are identical in sections with each other, the number of paths which come into question as alternative paths is increased.

## Revendications

1. Réseau automatique de télécommunication ayant plusieurs postes de transmission (VStA, VStB, VStC, VStD, VStE), lesquels sont reliés directement ou indirectement les uns aux autres, de telle sorte qu'au moins entre certaines paires de postes de transmission (VStA/VStE), plus de deux chemins (VStA-VStB-VStE, VStA-VStC-VStE, VStA-VStD-VStE) sont possibles, avec au moins un dispositif de sélection de chemin (ARU), lequel décide du choix du chemin à prendre pour chaque liaison devant être établie, et ne choisit pas un chemin lorsque celui-ci a été bloqué lors de la précédente tentative, **caractérisé en ce que** le dispositif de sélection de chemin (ARU) est développé de telle sorte qu'il ne choisit pas aussi un autre chemin, lorsque celui-ci est en partie identique (Mux-Mux) au chemin qui a été bloqué lors de la précédente tentative.

2. Procédé pour l'établissement d'une liaison transmise dans un réseau automatique de télécommunication ayant plusieurs postes de transmission (VStA, VStB, VStC, VStD, VStE), lesquels sont reliés directement ou indirectement les uns aux autres, de telle sorte qu'au moins entre certaines paires de postes de transmission (VStA/VStE), plus de deux chemins (VStA-VStB-VStE, VStA-VStC-VStE, VStA-VStD-VStE) sont possibles, avec au moins un dispositif de sélection de chemin (ARU), lequel décide du choix du chemin à prendre pour chaque liaison devant être établie, et ne choisit pas un chemin lorsque celui-ci a été bloqué lors du précédent essai, **caractérisé en ce que** le dispositif de sélection de chemin (ARU) ne choisit pas aussi un autre chemin, lorsque celui-ci est identique en partie (Mux-Mux) au chemin qui a été bloqué lors de la précédente tentative.

3. Poste de transmission pour un réseau automatique de télécommunication ayant plusieurs postes de transmission (VStA, VStB, VStC, VStD, VStE), lesquels sont reliés directement ou indirectement les uns aux autres, de telle sorte qu'au moins entre le poste de transmission (VStA) et un autre poste de transmission (VStE), plus de deux chemins (VStA-VStB-VStE, VStA-VStC-VStE, VStA-VStD-VStE) sont possibles, avec un dispositif de sélection de chemin (ARU), lequel décide du choix du chemin à prendre pour chaque liaison devant être établie, et ne choisit pas un chemin lorsque celui-ci a été bloqué lors de la précédente tentative, **caractérisé en ce que** le dispositif de sélection de chemin (ARU) est développé de telle sorte qu'il ne choisit pas aussi un autre chemin, lorsque celui-ci est en partie identique (Mux-Mux) au chemin qui a été bloqué lors de la précédente tentative.

4. Dispositif de sélection de chemin (ARU) pour un réseau automatique de télécommunication ayant plusieurs postes de transmission (VStA, VStB, VStC, VStD, VStE), lesquels sont reliés directement ou indirectement les uns aux autres, de telle sorte qu'au moins entre certaines paires de postes de transmission (VStA/VStE), plus de deux chemins (VStA-VStB-VStE, VStA-VStC-VStE, VStA-VStD-VStE) sont possibles, le dispositif de sélection de chemin (ARU) pouvant être associé à au moins un des postes de transmission (VStA) et étant conçu de telle sorte qu'il décide du choix du chemin à prendre pour chaque liaison devant être établie, et ne choisit pas un chemin lorsque celui-ci a été bloqué lors d'un précédent essai, **caractérisé en ce que** le dispositif de sélection de chemin (ARU) est conçu de telle sorte qu'il ne choisit pas aussi un autre chemin, lorsque celui-ci est identique en partie (Mux-Mux) avec le chemin qui a été bloqué lors de la précédente tentative.

5. Réseau automatique de télécommunication selon la revendication 1, **caractérisé en ce que** là où deux chemins à prendre en considération sont en partie identiques entre eux, le nombre de chemins alternatifs à considérer est augmenté.
